Europäisches Patentamt

European Patent Office

Office européen des brevets

(19)

(11) Veröffentlichungsnummer: **0 040 810**
**B1**

(12) **EUROPÄISCHE PATENTSCHRIFT**

(45) Veröffentlichungstag der Patentschrift:
**21.11.84**

(21) Anmeldenummer: **81103873.6**

(22) Anmeldetag: **20.05.81**

(51) Int. Cl.³: **F 16 F 3/06**, B 61 G 11/06,
F 16 F 13/02

(54) **Reibungsfeder.**

(30) Priorität: **24.05.80 DE 3020026**

(43) Veröffentlichungstag der Anmeldung:
**02.12.81 Patentblatt 81/48**

(45) Bekanntmachung des Hinweises auf die Patenterteilung:
**21.11.84 Patentblatt 84/47**

(84) Benannte Vertragsstaaten:
**AT DE FR SE**

(56) Entgegenhaltungen:
**EP - A - 0 029 128**
**DE - A - 2 657 836**
**DE - A - 2 708 367**
**DE - A - 2 918 091**
**DE - A - 2 918 092**
**DE - A - 2 918 095**
**DE - A - 2 925 948**
**DE - B - 1 146 708**
**DE - B - 1 286 818**
**DE - B - 2 641 593**
**DE - C - 563 194**
**DE - U - 1 822 759**
**FR - A - 2 160 212**

(73) Patentinhaber: **Ringfeder G.m.b.H., Duisburger Strasse 145, D-4150 Krefeld-Uerdingen (DE)**

(72) Erfinder: **Stiefel, Christian, Dr.-Ing., Moreller Weg 24, D-5100 Aachen (DE)**
Erfinder: **Friedrichs, Josef, Dr.-Ing, Heyenbaumstrasse 136, D-4150 Krefeld-Verberg (DE)**
Erfinder: **Marsella, Gino, Dipl.-Ing., Kranichstrasse 7, D-4040 Neuss 21 (DE)**
Erfinder: **Kahle, Horst, Topsstrasse 65, D-4150 Krefeld 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Reibungsfeder, die im wesentlichen aus innerhalb einer Schmutz und Feuchtigkeit von der Feder abhaltenden Ummantelung angeordneten Innen- und Außenringen gebildet ist, die über konische Berührungsflächen und unter Einsatz eines Schmiermittels zusammenwirken, wobei innerhalb des von den Innen- und Außenringen umschlossenen Raumes ein Einbaukörper mit einem in bezug auf den lichten Durchmesser der Innenringe kleineren Durchmesser und zwischen den Ringen und dem Einbaukörper eine zusätzliche Menge an Schmiermittel angeordnet ist.

Reibungsfedern sind als Maschinenelemente seit langem bekannt und über den allgemeinen Maschinenbau hinaus vor allem als Federn für Hülsenpuffer und Federwerke von Schienenfahrzeugen verbreitet, wobei sie sich durch hohe statische und dynamische Belastbarkeit und großes Dämpfungsvermögen auszeichnen. Für ihre Lebensdauer sind neben der Ringgeometrie, der Oberflächenbeschaffenheit der konischen Berührungsflächen sowie Art und Härte des Federwerkstoffes geeignete Schmiermittel, meist spezielle Schmierfette, und ein Federgehäuse wesentlich, das die Innen- und Außenringe gegen Staub und Feuchtigkeit schützt.

Bei einer durch die DE-U-1 822 759 bekannten Reibungsfeder mit den Merkmalen der eingangs genannten Gattung sind die Innen- und Außenringe zwischen einem als gehäuseartige Ummantelung dienenden äußeren Balg und einem einen Einbaukörper bildenden inneren Balg angeordnet; der äußere Balg und der innere Balg sind faltenlos bzw. gefaltet und jeweils unter Zugvorspannung an den Federenden befestigt. Diese Bälge ermöglichen zwar die Anordnung einer zusätzlichen Menge an Schmiermittel für die Innen- und Außenringe, wodurch ein längerer wartungsfreier Einsatz der Reibungsfeder erzielt werden soll. Bei dieser Anordnung besteht aber immer noch — insbesondere bei größeren Druckhubbewegungen — die Gefahr, daß die konischen Berührungsflächen der Ringe nicht ausreichend mit Schmiermittel versorgt werden und dadurch die Lebensdauer der Feder beeinträchtigt wird.

Der Erfindung liegt die Aufgabe zugrunde, eine Reibungsfeder der gattungsgemäßen Art durch möglichst einfache, billige Mittel hinsichtlich ihrer an sich langen Lebensdauer noch zu verbessern und, auch bei extremen Betriebsbedingungen, weitestgehend konstante Federkennwerte zu erzielen.

Diese Aufgabe wird erfindungsgemäß dadurch gelöst, daß der Einbaukörper als zylindrische Säule aus elastisch verformbarem Werkstoff ausgebildet ist, wobei das in dem ringförmigen Spalt zwischen der Säule und den Ringen angeordnete Schmiermittel durch die sich proportional zu den Druckhubbewegungen der Reibungsfeder in ihrem Außendurchmesser ändernde zylindrische Säule den konischen Berührungsflächen der Ringe unter stetig steigendem Druck zugeführt wird.

Nach einer erfindungsgemäßen Weiterbildung besteht die zylindrische Säule aus Schaumgummi.

Gemäß einem nächsten Gedanken der Erfindung ist die zylindrische Säule werkstoffmäßig zur Aufnahme von Schmiermittel ausgelegt. Dadurch steht vorteilhaft ein zusätzlicher, in der Struktur der Säule lagernder Vorrat an Schmiermittel zur Verfügung.

Eine Vorspannung für die Reibungsfeder wird üblicherweise dadurch erzielt, daß der am jeweiligen Ende der Feder befindliche Ring gegen einen Flansch eines im Querschnitt hutförmigen Zugtopfes anliegt, wobei diese Zugtöpfe über einen zentralen Schraubenbolzen miteinander verbunden sind. Hierdurch steht eine einbaufertige, leicht zu handhabende Federsäule zur Verfügung. Für eine derartige Federsäule ist nach einer Ausgestaltung der Erfindung vorgesehen, daß die zylindrische Säule an ihren Enden eine dem Querschnitt des hutförmigen Abschnittes des jeweiligen Zugtopfes entsprechende Ausnehmung aufweist und über diese Ausnehmung dicht gegen den jeweiligen Zugtopf anliegt.

Nach einer ergänzenden Weiterbildung gemäß der Erfindung ist im Bereich der Durchführung des Schraubenbolzens durch den jeweiligen Zugtopf eine den Austritt des Schmiermittels verhindernde Dichtung angeordnet.

Um die vorgenannte Abdichtung besonders einfach zu gestalten, besteht eine Ausführungsform der Erfindung darin, daß die Dichtung über eine Nut an ihrem zugtopfseitigen Ende formschlüssig an der zentralen Bohrung des Zugtopfes gehaltert ist.

Gemäß einer weiteren Ausgestaltung der Erfindung ist vorgesehen, daß mindestens einer der beiden Zugtöpfe eine dicht verschließbare Einfüllöffnung für das Schmiermittel aufweist.

Die mit dem Gegenstand nach der Erfindung erzielbaren Vorteile bestehen insbesondere darin, daß die konischen Berührungsflächen der Innen- und Außenringe über die bei Hubbewegungen nach Art einer Pumpe arbeitende zylindrische Säule ständig mit Schmiermittel versorgt werden, wobei der durch diese Säule auf das Schmiermittel ausgeübte Druck proportional zum Federweg ansteigt und gerade dann höher ist, wenn die Feder stärker beansprucht wird. Dadurch weist die Reibungsfeder auch bei extremen Betriebsbedingungen eine erheblich längere Lebensdauer und dabei über den gesamten Einsatzzeitraum die im Neuzustand geschaffenen optimalen Federkennwerte auf; insgesamt gesehen liegt eine noch größere Wirtschaftlichkeit vor.

Ein Ausführungsbeispiel der Erfindung ist in der Zeichnung dargestellt und wird im folgenden näher beschrieben. Es zeigt

Fig. 1 eine Reibungsfeder innerhalb eines als Hülsenpuffer für Schienenfahrzeuge ausgebildeten Federgehäuses, im Längsschnitt,

Fig. 2 die Einzelheit X aus Fig. 1 im vergrößerten Maßstab, jedoch in alternativer Ausführung.

Das vorgenannte Federgehäuse besteht aus einem äußeren Gehäuseteil 8 und einem inneren Gehäuseteil 9, die teleskopartig ineinander geführt und jeweils mit einer Grundplatte 8a bzw. 9a versehen sind. Dieses Federgehäuse nimmt eine im wesentlichen aus Innenringen 1 und Außenringen 2 gebildete Reibungsfeder auf, deren Ringe 1 und 2 über konische Berührungsflächen 1a bzw. 2a unter Einsatz eines Schmiermittels 3, hier eines speziellen Fettes, zusammenwirken. Die Reibungsfeder ist unter Vorspannung gegen die Grundplatten 8a und 9a abgestützt, wobei der Ausschub der Gehäuseteile 8 und 9 durch einen am offenen Ende des äußeren Gehäuseteils 8 angeschweißten, gegen einen Bund 9b des inneren Gehäuseteils 9 anliegenden geschlitzten Ring 8b begrenzt wird, der im übrigen eine auch dem Abdichten dienende Gleitbuchse 10 enthält. Vor dem Einbau in die Gehäuseteile 8 und 9 sind die Ringe 1 und 2 der Reibungsfeder durch hutförmige Zugtöpfe 6 und einen zentralen Schraubenbolzen 5 zu einer bereits vorgespannten, leicht zu handhabenden Federsäule vereinigt.

Innerhalb des von den Innen- und Außenringen 1 bzw. 2 umschlossenen Raumes ist ein Einbaukörper 4 in Gestalt einer zylindrischen Säule 4a aus elastisch verformbarem Werkstoff (Schaumgummi) angeordnet. Die zylindrische Säule 4a hat einen in bezug auf den lichten Durchmesser der Innenringe 1 kleineren Außendurchmesser. Der so gebildete ringförmige Spalt ist mit einer zusätzlichen, für alle auftretenden Betriebsbedingungen ausreichenden Menge an Schmiermittel 3 gefüllt. Dieses Schmiermittel 3 wird durch die sich entsprechend den Hubbewegungen der Reibungsfeder in ihrem Außendurchmesser ändernde zylindrische Säule 4a den konischen Berührungsflächen 1a und 2a der Ringe 1 bzw. 2 zugeführt; die Säule 4a arbeitet also ähnlich wie eine Pumpe. Zur Schaffung eines weiteren Vorrates an Schmiermittel 3 kann die zylindrische Säule 4a werkstoffmäßig zur Aufnahme von Schmiermittel 3 ausgelegt sein.

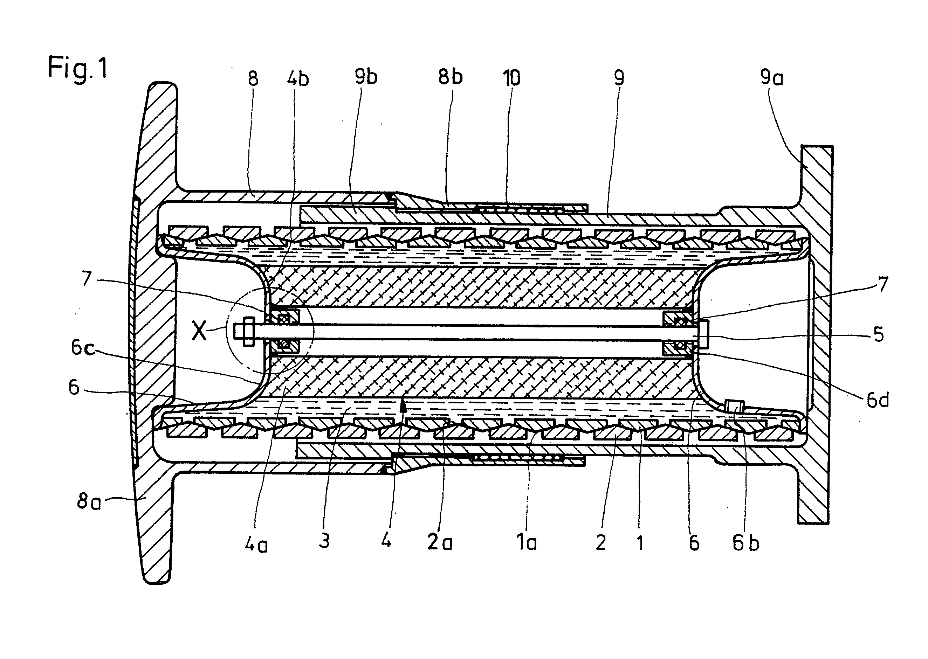

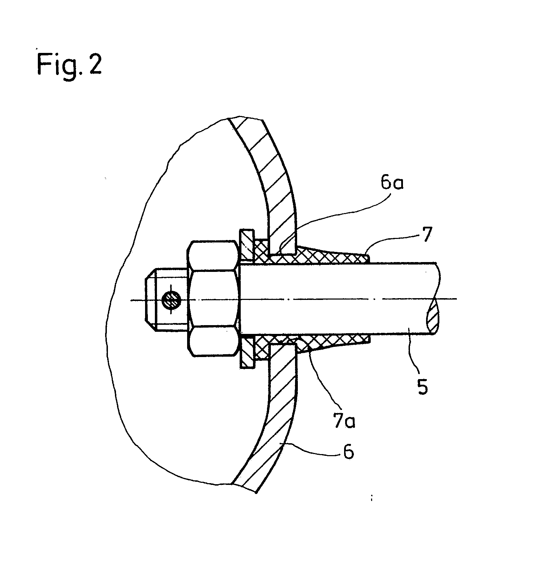

Im Hinblick auf eine Abdichtung im Bereich der Durchführung des Schraubenbolzens 5 durch den jeweiligen Zugtopf 6 hat die zylindrische Säule 4a an ihren Enden eine dem Querschnitt des hutförmigen Abschnittes 6c des jeweiligen Zugtopfes 6 entsprechende Ausnehmung 4b. Zusätzlich weist jeder Zugtopf 6 eine Halterung 6d für eine Dichtung 7 auf; diese Halterungen 6d können durch Schweißen mit dem jeweiligen Zugtopf 6 verbunden oder einteilig daran angeformt sein. Alternativ ist gemäß Fig. 2 die Dichtung 7 über eine Nut 7a unmittelbar an der zentralen Bohrung 6a des Zugtopfes 6 gehaltert. Nach Fig. 1 weist schließlich einer der beiden Zugtöpfe 6 eine Einfüllöffnung 6b für das Schmiermittel 3 auf, die durch einen nicht gezeigten Gewindestopfen verschlossen ist.

## Patentansprüche

1. Reibungsfeder, die im wesentlichen aus innerhalb einer Schmutz und Feuchtigkeit von der Feder abhaltenden Ummantelung (Federgehäuse 8, 9) angeordneten Innen- und Außenringen (1 bzw. 2) gebildet ist, die über konische Berührungsflächen (1a, 2a) und unter Einsatz eines Schmiermittels (3) zusammenwirken, wobei innerhalb des von den Innen- und Außenringen (1 bzw. 2) umschlossenen Raumes ein Einbaukörper (4) mit einem in bezug auf den lichten Durchmesser der Innenringe (1) kleineren Außendurchmesser und zwischen den Ringen (1, 2) und dem Einbaukörper (4) eine zusätzliche Menge an Schmiermittel (3) angeordnet ist, dadurch gekennzeichnet, daß der Einbaukörper (4) als zylindrische Säule (4a) aus elastisch verformbarem Werkstoff ausgebildet ist, wobei das in dem ringförmigen Spalt zwischen der Säule (4a) und den Ringen (1, 2) angeordnete Schmiermittel (3) durch die sich proportional zu den Druckhubbewegungen der Reibungsfeder in ihrem Außendurchmesser ändernde zylindrische Säule (4a) den konischen Berührungsflächen (1a, 2a) der Ringe (1 bzw. 2) unter stetig steigendem Druck zugeführt wird.

2. Reibungsfeder nach Anspruch 1, dadurch gekennzeichnet, daß die zylindrische Säule (4a) aus Schaumgummi besteht.

3. Reibungsfeder nach Anspruch 1 oder 2, dadurch gekennzeichnet, daß die zylindrische Säule (4a) werkstoffmäßig zur Aufnahme von Schmiermittel (3) ausgelegt ist.

4. Reibungsfeder nach einem der Ansprüche 1 bis 3, deren am jeweiligen Ende befindlicher Ring gegen einen Flansch eines im Querschnitt hutförmigen Zugtopfes (6) anliegt, wobei diese Zugtöpfe (6) über einen zentralen Schraubenbolzen (5) miteinander verbunden sind, dadurch gekennzeichnet, daß die zylindrische Säule (4a) an ihren Enden eine dem Querschnitt des hutförmigen Abschnittes (6c) des jeweiligen Zugtopfes (6) entsprechende Ausnehmung (4b) aufweist und über diese Ausnehmung (4b) dicht gegen den jeweiligen Zugtopf (6) anliegt.

5. Reibungsfeder nach Anspruch 4, dadurch gekennzeichnet, daß im Bereich der Durchführung des Schraubenbolzens (5) durch den jeweiligen Zugtopf (6) eine den Austritt des Schmiermittels (3) verhindernde Dichtung (7) angeordnet ist.

6. Reibungsfeder nach Anspruch 5, dadurch gekennzeichnet, daß die Dichtung (7) über eine Nut (7a) an ihrem zugtopfseitigen Ende formschlüssig an der zentralen Bohrung (6a) des Zugtopfes (6) gehaltert ist.

7. Reibungsfeder nach einem der Ansprüche 4 bis 6, dadurch gekennzeichnet, daß mindestens einer der beiden Zugtöpfe (6) eine dicht verschließbare Einfüllöffnung (6b) für das Schmiermittel (3) aufweist.

## Claims

1. A friction spring substantially formed from inner and outer rings (1 and 2 respectively) which are disposed inside a casing (spring housing 8, 9) keeping dirt and moisture away from the spring and cooperate via conical contact faces (1a, 2a) and by using a lubricant (3), an insert member (4) having a smaller outer diameter in relation to the inside diameter of the inner rings (1) being arranged within the space enclosed by the inner and outer rings (1 and 2) and an additional quantiy of lubricant (3) being disposed between the rings (1, 2) and the insert member (4), characterized in that the insert member (4) is formed as a cylindrical column (4a) of resiliently deformable material, the lubricant (3) disposed in the annular gap between the column (4a) and the rings (1, 2) being delivered by the cylindrical column (4a), whose outer diameter changes in proportion to the compression stroke movements of the friction spring, to the conical contact faces (1a, 2a) of the rings (1 and 2) with constantly increasing pressure.

2. A friction spring according to claim 1, characterized in that the cylindrical column (4a) consists of expanded rubber.

3. A friction spring according to claim 1 or 2, characterized in that the cylindrical column (4a) is designed in terms of material so as to absorb lubricant (3).

4. A friction spring according to one of claims 1 to 3, whose ring located at the end in each case abuts against a flange of a tensioning cup (6) which is hat-shaped in cross-section, these tensioning cups (6) being connected to one another via a central screw bolt (5), characterized in that the cylindrical column (4a) comprises at its ends a recess (4b) corresponding to the cross-section of the hat-shaped section (6c) of the respective tensioning cup (6) and abuts close against the respective tensioning cup (6) via this recess (4b).

5. A friction spring according to claim 4, characterized in that a seal (7) preventing the escape of the lubricant (3) is disposed in the region in which the screw bolt (5) passes through the respective tensionning cup (6).

6. A friction spring according to claim 5, characterized in that the seal (7) is clamped positively at the central bore (6a) of the tensioning cup (6) via a groove (7a) at its end on the tensioning cup side.

7. A friction spring according to one of claims 4 to 6, characterized in that at least one of the two tensioning cups (6) comprises a tightly closable filler opening (6b) for the lubricant (3).

## Revendications

1. Ressort à friction qui est formé essentiellement par des bagues intérieures et des bauges extérieures (1 et 2), disposées à l'intérieur d'une enveloppe (carter de ressort 8, 9) protégeant le ressort contre l'encrassement et contre l'humidité, et gui coopèrent par des surfaces de contact coniques (1a, 2a) avec interposition d'un produit de graissage (3), avec, à l'intérieur de l'espace enfermé par les bagues intérieures et extérieures (1 et 2), un corps d'insertion (4) présentant un diamètre extérieur inférieur au diamètre libre des bagues intérieures (1), et avec, entre les bagues (1, 2) et le corps d'insertion (4), une quantité supplémentaire de produit de graissage (3), ressort caractérisé en ce que le corps d'insertion (4) est constitué par une colonne cylindrique (4a) en matériau élastiquement déformable, de telle sorte que le produit de graissage (3) disposé dans la fente annulaire formée entre la colonne (4a) et les bagues (1, 2) est transféré, par la colonne clyindrique (4a) dont le diamètre extérieur se modifie proportionnellement à la course de compression du ressort à friction, sous une pression constamement croissante, aux surfaces de contact coniques (1a, 2a) des bagues (1 et 2).

2. Ressort à friction suivant la revendication 1, caractérisé en ce que la colonne cylindrique (4a) est constituée en caoutchouc expansé en mousse.

3. Ressort à friction suivant l'une des revendications 1 ou 2, caractérisé en ce que la colonne cylindrique (4a) est prévue, dans le choix de son matériau constituant, pour recevoir du produit de graissage.

4. Ressort à friction suivant l'une des revendications 1 à 3, dont la bague se trouvant à chaque extrémité, est appliquée contre une bride d'une cuvette de traction à section transversale en forme de capuchon (6), ces cuvettes (6) étant réunies entre elles par un axe fileté central (5), ressort caractérisé en ce que la colonne cylindrique (4a) présente, à chaque extrémité, un évidement (4b) correspondant à la section transversale la portion en forme de capuchon (6c) de la cuvette de traction en question (6), et elle est appliquée, par cet évidement épaissement contre la cuvette (6).

5. Ressort à friction suivant la revendication 4, caractérisé en ce que, dans le domaine de passage de l'axe fileté (5) à travers chacune des cuvettes de traction (6) est disposée une garniture d'étanchéité (7) s'opposant à la sortie du proudit de graissage (3).

6. Ressort à friction suivant la revendication 5, caractérisé en ce que la garniture d'étanchéité (7) est maintenue en place, par engagement de forme, par une gorge (7a) prévue sur son extrémité face à la cuvette contre le perçage central (6a) de la cuvette de traction.

7. Ressort à friction suivant l'une quelconque des revendications 4 à 6, caractérisé en ce que au moins l'une des deux cuvettes de traction (6) est pourvue d'une ouverture de remplissage (6b) à obturation étanche pour l'introduction du produit de graissage (3).

Fig.1

0 040 810

Fig. 2